# EUROPEAN PATENT APPLICATION

(11) **EP 3 076 519 A1**
(43) Date of publication of application: **05.10.2016**
(21) Application number: 16162623.9
(22) Date of filing: 29.03.2016
(51) Int. Cl.: H02K 1/14, H02K 29/03, H02K 11/215

(54) **SINGLE-PHASE BRUSHLESS MOTOR**

(30) Priority: 30.03.2015 CN 201510145444
(71) Applicant: Johnson Electric S.A., 3280 Murten (CH)
(72) Inventor: Li, Yue, Hong Kong (HK); Zhou, Chui You, Hong Kong (HK); Wang, Yong, Hong Kong (HK); Li, Yong, Hong Kong (HK)
(74) Representative: Hocking, Adrian Niall

(57) **Abstract**

A single-phase brushless motor includes a stator (1), a rotor (3) disposed within the stator (1), and sensors (5) disposed around an outer periphery of the rotor (3). The stator (1) includes a stator core (11) made of a magnetic-conductive material, and a stator winding (15) wound around the stator core (11). The rotor (3) includes a rotary shaft (31) and a pair of permanent magnetic poles (33). The stator core (11) includes a pair of stator poles forming a receiving hole (111) there between, and the rotor (3) is disposed in the receiving hole (111). The inner circumferential surface of the receiving hole (111) is located on a cylindrical surface which is coaxial with the rotary shaft (31) and two locating slots (113) which are symmetrical with respect to a center of the receiving hole (111) are defined in the inner circumferential surface of the receiving hole (111), which can improve the distribution of magnetic flux, effectively reduce cogging torque, and increase operation efficiency.

## Description

### CROSS REFERENCE TO RELATED APPLICATIONS

This non-provisional patent application claims priority from Patent Application No. 201510145444.9 filed in The People's Republic of China on March 30,2015.

### FIELD OF THE INVENTION

The present invention relates to motor technology, and in particular, to a single-phase brushless direct current motor.

### BACKGROUND OF THE INVENTION

Motors are devices that convert electric energy into mechanical energy under the principle of electromagnetic inductance, which are widely used in various electric appliances in the industrial production and people's lives.

Existing motors can be categorized into direct current motors and alternating current motors. Among the motors, brushless direct current motors have a wide variety of applications such as home appliances, cars, industrial control devices, automation equipment and aerospace.

A brushless motor refers to a motor having no brushes and commutator. The existing brushless motor is a typical electromechanical product which includes a stator, a rotor as well as a sensor. The stator includes a stator core and a stator winding. The rotor includes a rotor body and a rotary shaft. The rotor body is usually a permanent magnet. The rotary shaft is mounted in the rotor body and rotates with the rotor body to thereby output power.

In terms of the number of phases of the stator winding, brushless direct current motors can be categorized into single-phase brushless motor and three-phase brushless direct current motor.

Although the three-phase brushless motor has the advantages of reliable operation, low noise and high efficiency, it has a high cost.

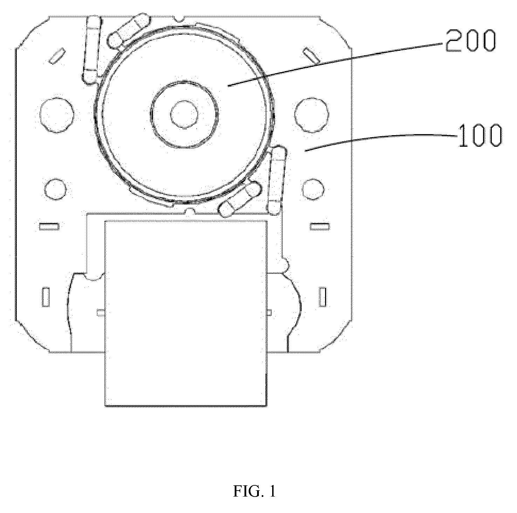

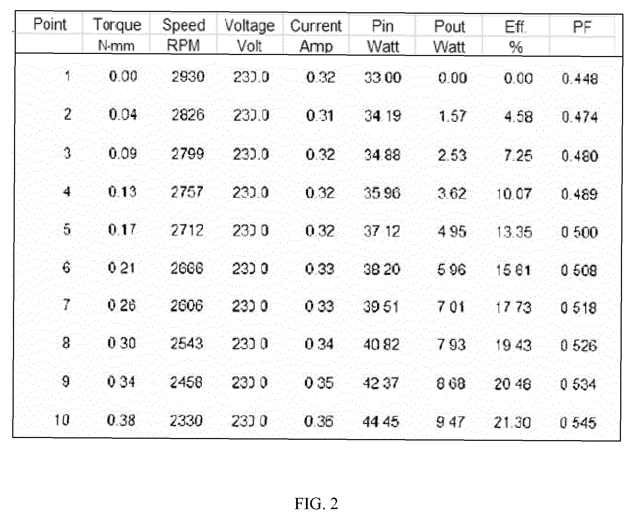

The single-phase brushless motor has a low production cost and is widely used in electric appliances such as fans. As shown in Fig. 1, a conventional shaded-pole motor that is commonly used in ventilating fans includes a stator 100, and a rotor 200 disposed in the stator 100. Conductors made of Aluminum are inserted in an interior of the rotor 200. Fig. 2 is a table showing performance parameters of the shaded-pole motor. As can be seen from Fig. 2, the shaded-pole motor of Fig. 1 has low operation efficiency.

### SUMMARY OF THE INVENTION

Therefore, there is a desire for a single-phase brushless motor which has improved operation efficiency.

There is another objective to provide a single-phase brushless motor which is capable of bidirectional rotation.

There is another objective to provide a single-phase brushless motor which has a wider rotation speed range.

There is another objective to provide a single-phase brushless motor of which its rotor can stop at a desired position.

A single-phase brushless motor is provided which comprises a stator, a rotor and sensors disposed around an outer periphery of the rotor. The stator comprises a stator core made from a magnetic-conductive material, and a stator winding wound around the stator core, the stator core comprising a pair of stator poles cooperatively forming a receiving hole there between, the stator poles being connected together via magnetic bridges, locating slots being defined in an inner circumferential surface of the receiving hole. The rotor comprises a rotor shaft and a pair of permanent magnetic poles disposed in the receiving hole. The locating slots are configured and designed to cause centers of the permanent magnetic poles to deviate from centers of corresponding stator poles respectively when the stator winding is not energized.

Preferably, a cross-section of the locating slot is generally a rectangle in shape, and in a cross-section perpendicular to the rotary shaft, the locating slot and an outer edge of the stator core adjacent the locating slot extend in the same direction.

Preferably, an outer peripheral surface of the stator core corresponding to the receiving hole forms a plurality of recesses.

Preferably, more than one such recess are disposed between adjacent locating slots, the more than one such recess have different depths, such that the magnetic bridges of stator core have different magnetic resistance at different positions corresponding to the different recesses.

Preferably, a first through hole is defined in the stator core at an area corresponding to each of two sides of the receiving hole, and in a cross-section perpendicular to the rotary shaft, each first through hole is located on an extension line of one corresponding locating slot.

Preferably, a circuit board is disposed behind the receiving hole of the stator core, the circuit board includes hollow posts corresponding to the first through holes, respectively, the circuit board defines a third through hole at a position corresponding to the receiving hole, curved passages passing through front and rear surfaces of the circuit board are defined at opposite sides of the through hole , respectively; the number of the sensors is two, and the two sensors are mounted in the curved passages, respectively.

Preferably, a first support bracket is disposed behind the circuit board, and a second support bracket is disposed on another side of the stator core, corresponding to the first support bracket; the first support bracket and the second support bracket respectively define a fourth through hole and a fifth through hole at positions corresponding to the receiving hole; a bearing is disposed in each of the fourth and fifth through holes of the first support bracket and the second support bracket, and the rotary shaft passes through the bearings.

Preferably, the first support bracket and the second support bracket respectively define sixth through holes and seventh through holes at positions corresponding to the first through holes, fastening means extending through the first through holes, sixth through holes and seventh through holes to fasten the first and second support brackets to the stator core.

Preferably, the inner circumferential surface of the receiving hole is located on a cylindrical surface, and a center line of the cylindrical surface is coincident with an axis of the rotary shaft .

Preferably, the number of the sensors is two, and the sensors and the locating slots are alternatively arranged in a circumferential direction of the rotor.

Preferably, in a cross-section perpendicular to the rotary shaft, the stator poles forms a closed annular structure around the receiving hole.

Preferably, two locating slots are defined in an inner circumferential surface of the receiving hole and the two locating slots are symmetrical with respect to a center of receiving hole.

Preferably, the rotor is capable of being started in two directions.

Preferably, in a cross-section perpendicular to the rotary shaft, the stator core has a rectangular configuration with four sides and the stator poles cooperatively constitute one of the sides.

In view of the foregoing, the stator of the single-phase brushless motor of the present invention defines a receiving hole in which the rotor is disposed. The stator core forms a closed annular structure around the receiving hole, which improves the distribution of magnetic flux and effectively reduces the cogging torque. By forming two locating slots symmetrical with respect to the center of the receiving hole in the inner circumferential surface of the receiving hole, the junction of the N-pole and S-pole of the rotator body rotates to the position corresponding to the locating slots when the rotor is in the initial state. In this position, the rotor permanent magnetic poles and the stator poles have a maximum magnetic attractive force there-between and are in their most stable state. Changing the positions of the locating slots can change the initial position of the rotor. In addition, clockwise rotation or counterclockwise rotation of the rotor can be achieved by changing the current direction of the stator winding. The single-phase brushless motor of the present invention has greater operation efficiency and wider rotation speed range in comparison with the shaded-pole motor.

### BRIEF DESCRIPTION OF THE DRAWINGS

Fig. 1 is a front view of a conventional shaded-pole motor for use in a ventilating fan;
Fig. 2 is a table showing performance parameters of the conventional shaded-pole motor for use in the ventilating fan;
Fig. 3 is a perspective view of a single-phase brushless motor according to the present invention;
Fig. 4 is a perspective view of a single-phase brushless motor according to the present invention, viewed from another aspect;
Fig. 5 is a perspective view of a stator and a rotor of the single-phase brushless motor according to the present invention;
Fig. 6 is a rear view of the stator and the rotor of the single-phase brushless motor according to the present invention;
Fig. 7 is an exploded view a stator core and a connecting portion of the single-phase brushless motor according to the present invention;
Fig. 8 is a perspective view of a circuit board of the single-phase brushless motor according to the present invention;
Fig. 9 is a perspective view of a first support bracket of the single-phase brushless motor according to the present invention;
Fig. 10 is a perspective view of a second support bracket of the single-phase brushless motor according to the present invention;
Fig. 11 is a table showing performance parameters of the single-phase brushless motor according to the present invention;
Fig. 12 is a waveform diagram of a cogging torque of the single-phase brushless motor according to the present invention;
Fig. 13 is a view showing magnetic flux density of the single-phase brushless motor according to the present invention;
Fig. 14 is a view showing data distribution of the magnetic flux density of the single-phase brushless motor according to the present invention;
Fig. 15 is a torque-vs-rotation-angle diagram.

### DETAILED DESCRIPTION OF THE PREFERRED EMBODIMENTS

Embodiments of the invention will now be described, by way of example only, with reference to figures of the accompanying drawings. In the figures, identical structures, elements or parts that appear in more than one figure are generally labeled with a same reference numeral in all the figures in which they appear. Dimensions of components and features shown in the figures are generally chosen for convenience and clarity of presentation and are not necessarily shown to scale.

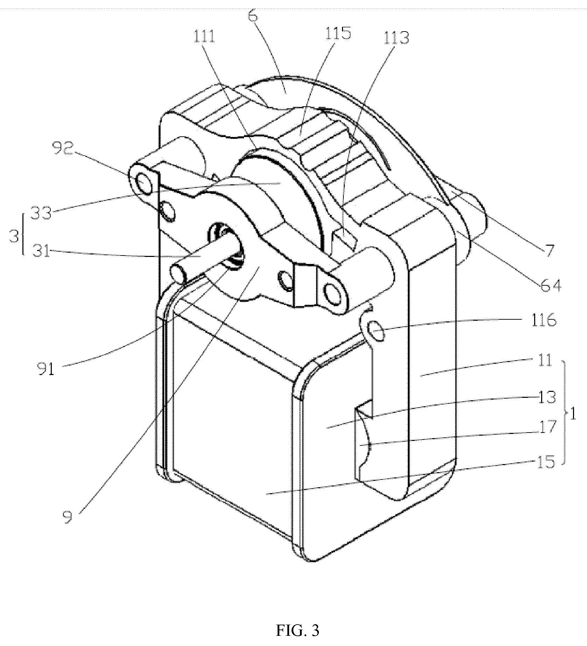

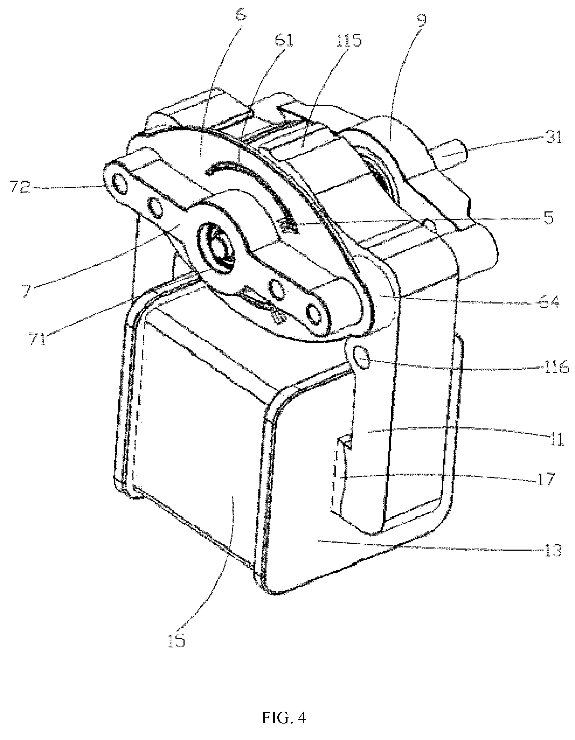

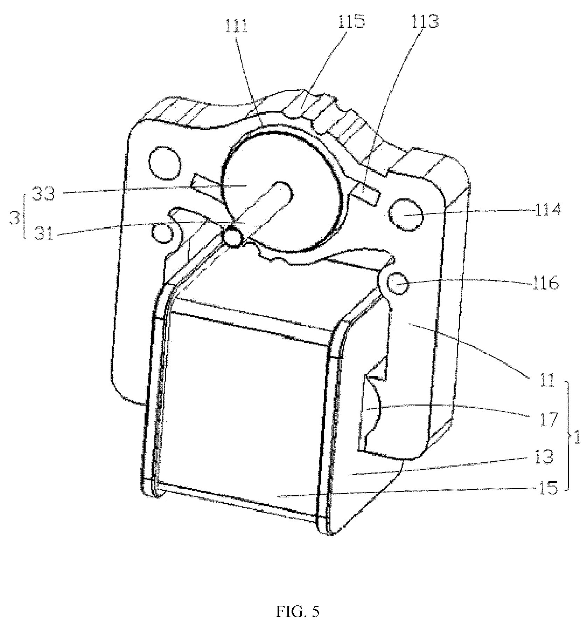

Referring to Fig. 3 through Fig. 6, the present invention provides a single-phase brushless motor which is applicable in appliances such as fans. The motor includes a stator 1, a rotor 3 disposed within the stator 1, and sensors 5 disposed around an outer periphery of rotor 3.

In particular, the stator 1 includes a stator core 11 made of a magnetic-conductive material. In this embodiment, the stator core is made of two parts: a body and a connecting member 17 connected to the stator body. A coil bobbin 13 is attached around the connecting member 17, and a stator winding 15 wound around the coil bobbin 13. Alternatively, the stator core may be one integral part.

The rotor 3 includes a rotor body 33, and a rotary shaft 31 disposed in the rotor body 33. The rotor body 33 comprises permanent magnetic poles made of permanent magnet material.

The stator core 11 comprises a pair of stator poles cooperatively forming a receiving hole 111 therebetween. The receiving hole 111 axially passes through front and rear surfaces of the stator core 11. The rotor body 33 is disposed in the receiving hole 111. Two locating slots 113 are defined in an inner circumferential surface of the receiving hole 111, which are symmetrical with respect to the center of the receiving hole 111 and preferably pass through the front and rear surfaces of the stator core 11. Preferably, the locating slots 113 extend axially continuously. Alternatively, the locating slots 113 extend discontinuously. On a cross-section perpendicular to the rotary shaft 31, the two parts of the stator core 11 preferably forms a closed rectangular configuration. The stator core 11 forms a closed annular structure around the receiving hole 111. Preferably, the inner circumferential surface of the receiving hole 111 is located on a cylindrical surface, an axial center line of the cylindrical surface is coincident with an axis of the rotary shaft 31. As such, the stator core 11 and the rotor 3 define there-between an air gap that is preferably uniform except for the areas of the locating slots 113.

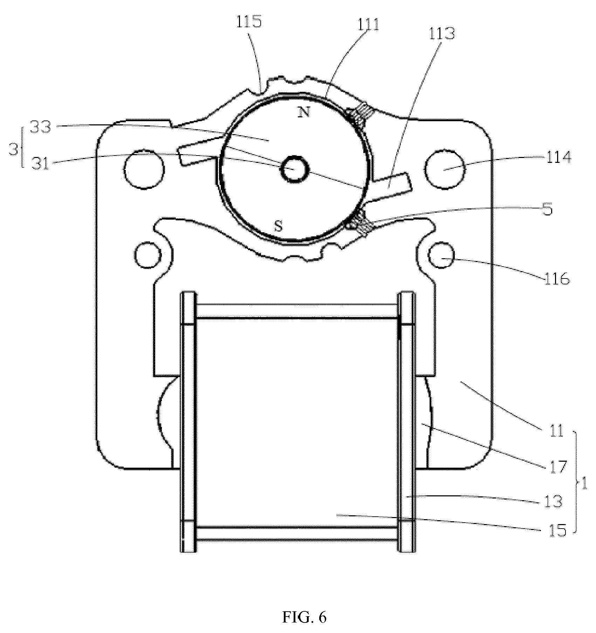

As shown in Fig. 6, a cross-section of the locating slot 113 may generally be a rectangle in shape and located within the cross-section perpendicular to the rotary shaft 31. The locating slot 113 and an outer edge of the stator core 11 adjacent the locating slot 113 extend in the same direction. Alternatively, the cross-section of the locating slot 113 may be generally curved, and the two locating slots 113 are diametrically disposed on extension lines of a diameter of the rotor, respectively. In this embodiment, the stator core 11 is generally square-shaped, and the receiving hole and rotor are disposed on one side of the square, with locations of the locating slots 113 deviating from a center of the one side in a width direction thereof.

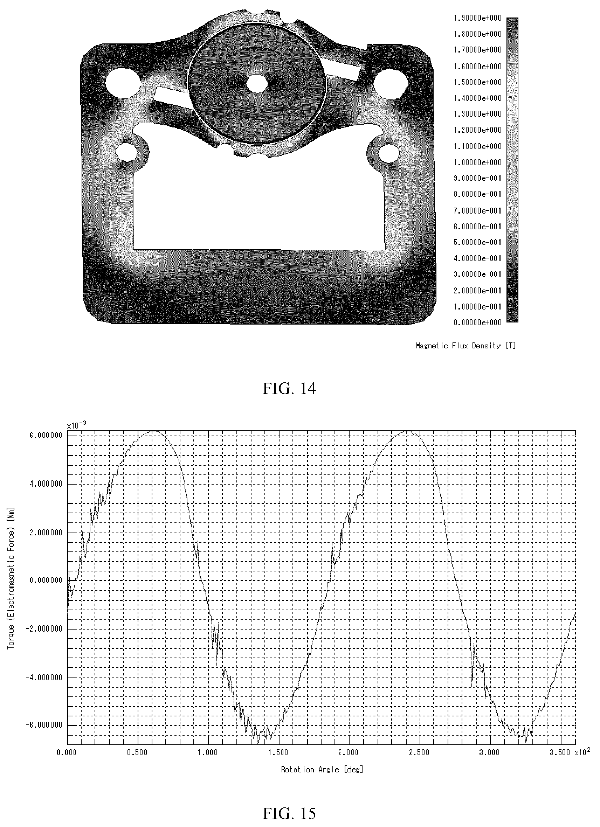

In this embodiment, the single-phase brushless motor is a two-pole single-phase brushless direct current motor. Referring also to Fig. 6 and Fig. 15, due to existing of the locating slots 113, under the condition that the stator winding 15 is not energized, when a junction of N-pole and S-pole of the rotor body 33 rotates to a position corresponding to the locating slot 113, the magnetic attractive force between the rotor permanent magnet and the stator core 11 reaches a maximum value and the rotor is in the most stable state, which enables the junction of the N-pole and S-pole of the rotor body 33 to stop at the position corresponding to the locating slot 113. That is, the centers of the permanent magnetic poles of the rotor deviate from the centers of the corresponding stator poles respectively. In addition, the stop position, i.e. an initial position, of the rotor body 33 can be changed by changing the position of the locating slot 113. Further, when the stator winding 15 is energized, the rotor body 33 can rotate clockwise or counterclockwise, depending upon the current direction of the stator winding 15. Changing the current direction can change the rotation direction of the rotor body 33, thereby achieving bidirectional rotation of the single-phase brushless direct current motor.

Further, an outer peripheral surface of the stator core 11 corresponding to the receiving hole 111 forms a plurality of pairs of recesses 115 that are symmetrical with respect to a center of the receiving hole 111 and preferably pass through the front and rear surfaces of the stator core 11. With the provision of the recesses 115, the stator core 11 forms magnetic bridges with large magnetic resistance at the areas corresponding to the recesses 115, which block the magnetic path, thereby reducing magnetic flux leakage and hence increasing utilization rate of the magnetic field. At least one of the recesses 115 is disposed between adjacent locating slots 113. It should be understood that the number of the recesses 115 between adjacent locating slots 113 is not intended to be limited to a particular value. Preferably, more than one recess 115 having different depths are disposed between the adjacent locating slots 113, such that the magnetic bridges formed at the areas corresponding to the different recesses 115 have different magnetic resistance.

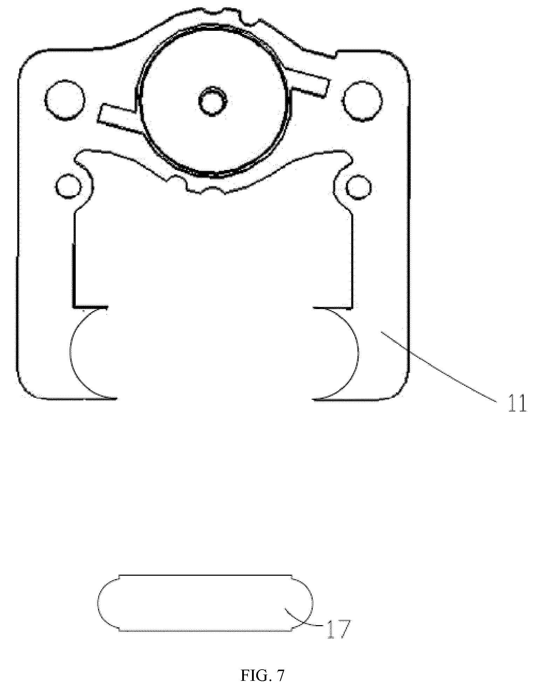

Referring also to Fig. 6 and Fig. 7, the connecting member 17 protrudes beyond opposite ends of the coil bobbin 13. The connecting member 17 is detachable relative to the main body of the stator core 11 to facilitate winding the stator winding 15 on the coil bobbin 13. The coil bobbin 13 is made of an insulating material such as plastic. It should be understood that the connecting member 17 may also be integrally formed with the stator core 11.

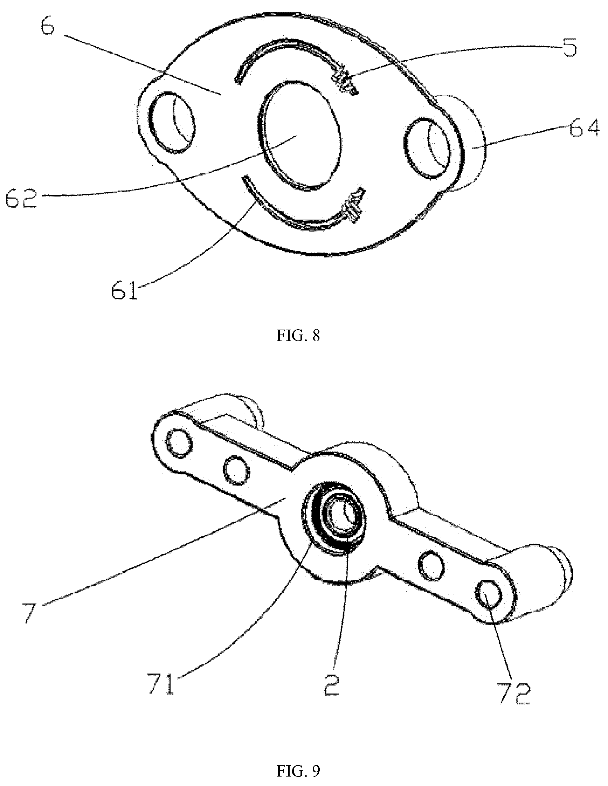

A first through hole 114 and a second through hole 116 are defined in the stator core 11 at an area corresponding to each of two sides of the receiving hole 111. In particular, in the cross-section perpendicular to the rotary shaft 31, each first through hole 114 is located on an extension line of one corresponding locating slot 113. The first through holes 114 are used to fix a circuit board 6, a first support bracket 7, and a second support bracket 9. The second through holes 116 are used to threadedly fix the single-phase brushless motor for use in a fan at a predetermined position. Referring also to Fig. 8, the circuit board 6 is disposed behind the receiving hole 111 of the stator core 11. The circuit board 6 includes hollow posts 114 corresponding to the first through holes 114, respectively. The circuit board 6 defines a third through hole 62 at a position corresponding to the receiving hole 111. Curved passages 61 passing through front and rear surfaces of the circuit board 6 are defined at opposite sides of the through hole 62, respectively. The number of the sensors 5 is two, and the two sensors 5 are both mounted on the circuit board and extend through the curved passages 61, respectively. The sensors 5 and the locating slots 113 are alternatively arranged in a circumferential direction of the rotor 3. The sensors 5 are used to sense the position of the rotor body 33 when the rotor body 33 rotates clockwise or counterclockwise, respectively. It should be understood that the sensor 5 may be a hall sensor or another suitable type of sensor.

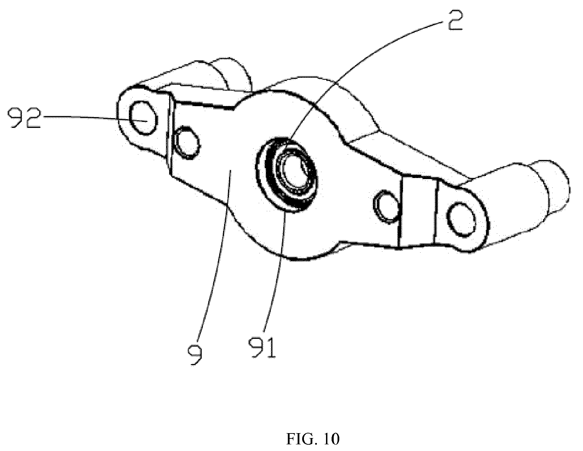

Referring also to Fig. 9 and Fig. 10, the first support bracket 7 is disposed behind the circuit board 6, and the second support bracket 9 is disposed on the other side of the stator core 11, corresponding to the first support bracket 7. The first support bracket 7 and the second support bracket 9 respectively define a fourth through hole 71 and a fifth through hole 91 at positions corresponding to the receiving hole 111, and respectively define sixth through holes 72 and seventh through holes 92 at positions corresponding to the first through holes 114.

The third through hole 62, the fourth through hole 71 and the fifth through hole 91 are aligned with one another for allowing the rotary shaft 31 to pass there through. The first support bracket 7, the circuit board 6 and the second support bracket 9 are fixed to the stator core 11 by bolts passing through the first through holes 72, the hollows posts 64, the first through holes 114 and the seventh through holes 92.

A bearing 2 is disposed in each of the fourth and fifth through holes 71, 91 of the first support bracket 7 and the second support bracket 9, for allowing the rotary shaft 31 to pass therethrough and supporting the rotary shaft 31.

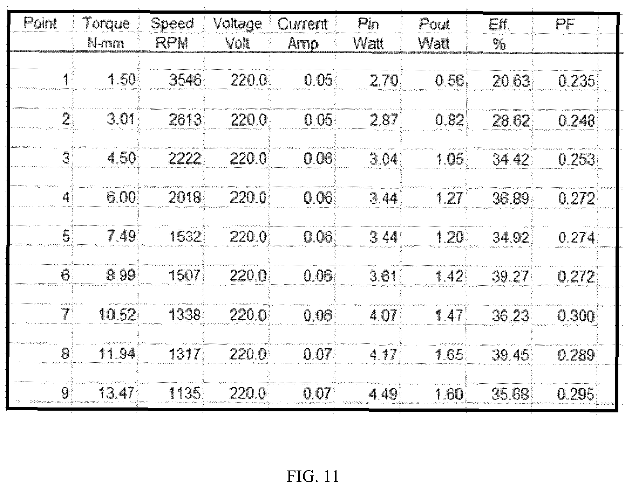

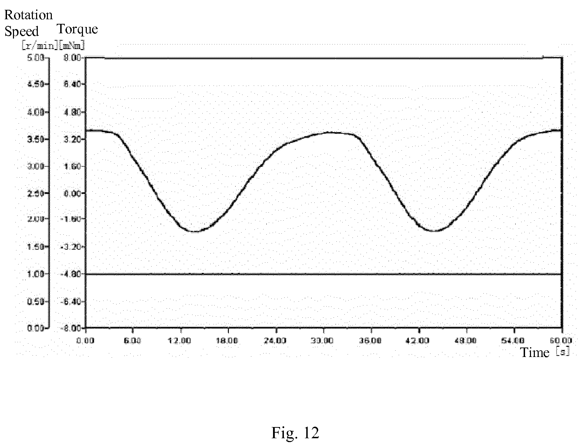

Fig. 11 is a table showing performance parameters of the single-phase brushless motor of the present invention. As can be seen from a comparison between the data of Fig. 11 and Fig. 2, the single-phase brushless motor of the present invention has operation efficiency obviously greater than the existing shaded-pole motor. Fig. 12 is a waveform diagram of the cogging torque of the single-phase brushless motor of the present invention. As can be seen from Fig. 12, the single-phase brushless motor of the present invention has a small cogging torque.

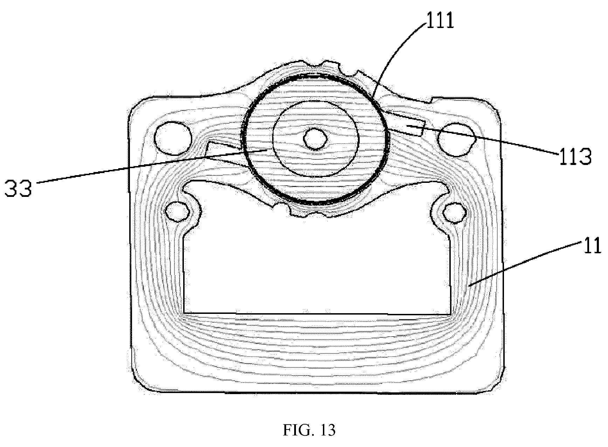

Fig. 13 illustrates magnetic flux density of the single-phase brushless motor of the present invention, and Fig. 14 illustrates data distribution of the magnetic flux density of the single-phase brushless motor of the present invention. As can be seen from Fig. 13 and Fig. 14, with the two locating slots 113 symmetrical with respect to the center of the receiving hole 111 disposed in the inner circumferential surface of the receiving hole 111 of the stator core 11, the magnetic flux density of the single-phase brushless motor for use in fans is significantly improved, which has a uniform distribution.

In summary, the stator of the single-phase brushless motor of the present invention defines a receiving hole in which the rotor is disposed. The stator core forms a closed annular structure around the receiving hole, which improves the distribution of magnetic flux density and effectively reduces the cogging torque. By forming two locating slots symmetrical with respect to the center of the receiving hole in the inner circumferential surface of the receiving hole, the junction of the N-pole and S-pole of the rotator body rotates to the position corresponding to the locating slots when the rotor is in the initial state. In this position, the rotor body and stator core have a maximum magnetic attractive force therebetween and are in their most stable state. Changing the positions of the locating slots can change the initial position of the rotor body. In addition, clockwise rotation or counterclockwise rotation of the rotor body can be achieved by changing the current direction of the stator winding. The single-phase brushless motor of the present invention has greater operation efficiency and wider rotation speed range in comparison with the shaded-pole motor.

Understandably, the single-phase brushless motor of the present invention can be used as a single-phase permanent-magnet synchronous motor too.

In the description and claims of the present application, each of the verbs "comprise", "include", "contain" and "have", and variations thereof, are used in an inclusive sense, to specify the presence of the stated item but not to exclude the presence of additional items.

Although the invention is described with reference to one or more preferred embodiments, it should be appreciated by those skilled in the art that various modifications are possible. Therefore, the scope of the invention is to be determined by reference to the claims that follow.

## Claims

1. A single-phase brushless motor, comprising:
a stator (1) including a stator core (11) made from a magnetic-conductive material, and a stator winding (15) wound around the stator core (11), the stator core (11) comprising a pair of stator poles cooperatively forming a receiving hole (111) there between, the stator poles being connected together via magnetic bridges, locating slots (113) being defined in an inner circumferential surface of the receiving hole (111);
a rotor (3) comprising a pair of permanent magnetic poles (33) disposed in the receiving hole (111), the locating slots being configured and designed to cause centers of the permanent magnetic poles to deviate from centers of corresponding stator poles respectively when the stator winding is not energized; and
sensors (5) disposed around an outer periphery of the rotor (3).

2. The single-phase brushless motor of claim 1, wherein a cross-section of the locating slot (113) is generally a rectangle in shape, and in a cross-section perpendicular to the rotary shaft (31), the locating slot (113) and an outer edge of the stator core (11) adjacent the locating slot (113) extend in the same direction.

3. The single-phase brushless motor of claim 1 or 2, wherein an outer peripheral surface of the stator core (11) corresponding to the receiving hole (111) forms a plurality of recesses (115).

4. The single-phase brushless motor of claim 3, wherein more than one such recess (115) are disposed between adjacent locating slots (113), the more than one such recess (115) have different depths, such that the magnetic bridges of stator core (11) have different magnetic resistance at different positions corresponding to the different recesses (115).

5. The single-phase brushless motor of any one of claims 1 to 4, wherein a first through hole (114) is defined in the stator core (11) at an area corresponding to each of two sides of the receiving hole (111), and in a cross-section perpendicular to the rotary shaft (31), each first through hole (114) is located on an extension line of one corresponding locating slot (113).

6. The single-phase brushless motor of claim 5, wherein a circuit board (6) is disposed behind the receiving hole (111) of the stator core (11), the circuit board (6) includes hollow posts corresponding to the first through holes (114), respectively, the circuit board (6) defines a third through hole (62) at a position corresponding to the receiving hole (111), curved passages (61) passing through front and rear surfaces of the circuit board (6) are defined at opposite sides of the through hole (62), respectively; the number of the sensors (5) is two, and the two sensors (5) are mounted in the curved passages (61), respectively.

7. The single-phase brushless motor of claim 6, wherein a first support bracket (7) is disposed behind the circuit board (6), and a second support bracket (9) is disposed on another side of the stator core (11), corresponding to the first support bracket (7); the first support bracket (7) and the second support bracket (9) respectively define a fourth through hole (71) and a fifth through hole (91) at positions corresponding to the receiving hole (111), and respectively define sixth through holes (72) and seventh through holes (92) at positions corresponding to the first through holes (114); a bearing (2) is disposed in each of the fourth and fifth through holes (71, 91) of the first support bracket (7) and the second support bracket (9), and the rotor comprises a rotary shaft (32) passing through the bearings (2), fastening means extending through the first through holes (114), sixth through holes (72) and seventh through holes (92) to fasten the first and second support brackets to the stator core.

8. The single-phase brushless motor of any one of claims 1 to 7, wherein the inner circumferential surface of the receiving hole (111) is located on a cylindrical surface, and a center line of the cylindrical surface is coincident with an axis of the rotary shaft (31).

9. The single-phase brushless motor of any one of claims 1 to 8, wherein the number of the sensors (5) is two, and the sensors (5) and the locating slots (113) are alternatively arranged in a circumferential direction of the rotor (3).

10. The single-phase brushless motor of any one of claims 1 to 9, wherein in a cross-section perpendicular to the rotary shaft (31), the stator poles forms a closed annular structure around the receiving hole (111).

11. The single-phase brushless motor of any one of claims 1 to 10, wherein two locating slots (113) are defined in an inner circumferential surface of the receiving hole (111) and the two locating slots are symmetrical with respect to a center of receiving hole (111).

12. The single-phase brushless motor of any one of claims 1 to 11, wherein the rotor (3) is capable of being started in two directions.

13. The single-phase brushless motor of any one of claims 1 to 12, wherein in a cross-section perpendicular to the rotary shaft (31), the stator core (11) has a rectangular configuration with four sides and the stator poles cooperatively constitute one of the sides.
